# EUROPEAN PATENT APPLICATION

(11) **EP 4 163 898 A1**
(43) Date of publication of application: **12.04.2023**
(21) Application number: 22194734.4
(22) Date of filing: 09.09.2022
(51) Int. Cl.: G08G 5/00

(54) **ELECTRONIC FLIGHT BAG TRANSPONDER DATA HARVESTING**

(30) Priority: 11.10.2021 US 202117498458
(71) Applicant: Lockheed Martin Corporation, Bethesda, Maryland 20817 (US)
(72) Inventor: Takacs, Robert S., Oxford, 06611-4816 (US)
(74) Representative: Schmitt-Nilson Schraud Waibel Wohlfrom Patentanwälte Partnerschaft mbB

(57) **Abstract**

Systems and methods for harvesting data for an electronic flight bag (EFB) device. The system includes an electronic communication device located in the aircraft and configured to receive aircraft state information transmitted in a first communication protocol via an electronic transponder located in the aircraft, decode the aircraft state information, repackage the aircraft state information as decoded in a second communication protocol, and transmit the aircraft state information as repackaged. The system also includes an electronic flight bag device communicatively coupled to the electronic communication device. The electronic flight bag device includes a transceiver configured to receive the aircraft state information as repackaged and transmitted via the electronic communication device. The system also includes an electronic processor configured to process the aircraft state information from the electronic communication device and perform flight performance planning based on the processed aircraft state information.

## Description

Embodiments described herein relate to data harvesting of aircraft data and, more particularly, to systems and methods for harvesting data from a transponder included in an aircraft via a receiver device also included in the aircraft.

An electronic flight bag (EFB) is an electronic device that executes applications utilized by an aircraft operator for performing flight management tasks, such as custom flight performance planning (for example, navigation). Information utilized by the EFB may be received from one or more avionic systems of the aircraft. For example, an automatic dependent surveillance-broadcast (ADS-B) IN device may provide weather and traffic data received from an ADS-B network to the EFB.

While some data usable by an EFB is available from typical data-links like satcom and ADS-B, some aircraft state information may only be available via multiple wired data connections. Such connections may be expensive and require modification of the aircraft, as well as additional aircraft certifications. Accordingly, embodiments described herein use an ADS-B IN device to capture own-aircraft data wirelessly transmitted by a transponder, such as, for example, a Mode S transponder, included in the aircraft. The ABS-B IN device decodes the received data, packages the decoded data, and re-transmits the packaged data to the EFB.

In particular, one embodiment provides an electronic flight bag system for an aircraft. The system includes an electronic communication device located in the aircraft and configured to receive aircraft state information transmitted in a first communication protocol via an electronic transponder located in the aircraft, decode the aircraft state information, repackage the aircraft state information as decoded in a second communication protocol, and transmit the aircraft state information as repackaged. The system also includes an electronic flight bag device communicatively coupled to the electronic communication device. The electronic flight bag device includes a transceiver configured to receive the aircraft state information as repackaged and transmitted via the electronic communication device. The system also includes an electronic processor configured to process the aircraft state information from the electronic communication device and perform flight performance planning based on the processed aircraft state information.

Another embodiment provides a method of operating an electronic flight bag system for an aircraft. The method includes receiving, at an electronic communication device located in the aircraft, aircraft state information transmitted in a first communication protocol via an electronic transponder located in the aircraft and decoding, at the electronic communication device, the aircraft state information. The method also includes repackaging, at the electronic communication device, the aircraft state information as decoded in a second communication protocol and transmitting, from the electronic communication device, the air state information as repackaged to an electronic flight bag device.

Yet another embodiment provides an electronic communication device for an electronic flight bag system of an aircraft. The device includes a transceiver and an electronic processor. The electronic processor is configured to receive, via the transceiver, aircraft state information transmitted in a first communication protocol from an electronic transponder located in the aircraft, decode the aircraft state information, repackage the aircraft state information as decoded in a second communication protocol, and transmit the aircraft state information as repackaged to an electronic flight bag device.
FIG. 1 schematically illustrates an electronic flight bag (EFB) system, according to some embodiments.
FIG. 2 schematically illustrates an EFB device of the system of FIG. 1, according to some embodiments.
FIG. 3 illustrates an electronic communication device of the system of FIG. 1, according to some embodiments.
FIG. 4 is a flowchart illustrating a method implemented by the system of FIG. 1, according to some embodiments.

One or more embodiments are described and illustrated in the following description and accompanying drawings. These embodiments are not limited to the specific details provided herein and may be modified in various ways. Furthermore, other embodiments may exist that are not described herein. Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed. Furthermore, some embodiments described herein may include one or more electronic processors configured to perform the described functionality by executing instructions stored in non-transitory, computer-readable medium. Similarly, embodiments described herein may be implemented as non-transitory, computer-readable medium storing instructions executable by one or more electronic processors to perform the described functionality. As used in the present application, "non-transitory computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a ROM (Read Only Memory), a RAM (Random Access Memory), register memory, a processor cache, or any combination thereof.

It will also be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

For ease of description, some or all of the example systems presented herein are illustrated with a single exemplar of each of its component parts. Some examples may not describe or illustrate all components of the systems. Other example embodiments may include more or fewer of each of the illustrated components, may combine some components, or may include additional or alternative components.

It should be understood that although certain figures presented herein illustrate hardware and software located within particular devices, these depictions are for illustrative purposes only. In some embodiments, the illustrated components may be combined or divided into separate software, firmware, and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links.

In addition, the phraseology and terminology used herein is for the purpose of description and should not be regarded as limiting. For example, the use of "including," "containing," "comprising," "having," and variations thereof herein is meant to encompass the items listed thereafter and equivalents thereof as well as additional items. The terms "connected" and "coupled" are used broadly and encompass both direct and indirect connecting and coupling. Further, "connected" and "coupled" are not restricted to physical or mechanical connections or couplings and can include electrical connections or couplings, whether direct or indirect. In addition, electronic communications and notifications may be performed using wired connections, wireless connections, or a combination thereof and may be transmitted directly or through one or more intermediary devices over various types of networks, communication channels, and connections. Moreover, relational terms such as first and second, top and bottom, and the like may be used herein solely to distinguish one entity or action from another entity or action without necessarily requiring or implying any actual such relationship or order between such entities or actions.

As noted above, embodiments described herein provide systems and methods for harvesting data (in particular, aircraft state information) transmitted from a surveillance transponder (for example, a Mode-S transponder) according to a first communication protocol via a surveillance IN device (for example, an automatic dependent surveillance-broadcast (ADS-B) IN device). The surveillance IN device repackages the received data and transmits the data to an electronic flight bag (EFB) according to a second communication protocol. The EFB utilizes the received data in one or more flight management applications, improving its functionality. While the systems and methods described below are described mainly in terms of an ADS-B system and a Mode-S transponder, it should be understood that the systems and methods below may be applied to other kinds of aircraft surveillance systems and protocols.

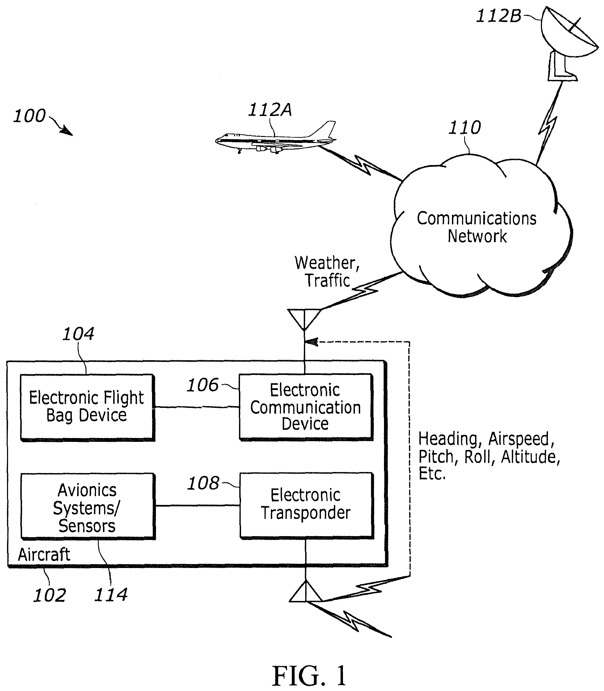

FIG. 1 illustrates an EFB system 100 for an aircraft 102. According to the embodiment illustrated in FIG. 1, the system 100 is integrated into an aircraft 102. In particular, the aircraft 102 includes an EFB device 104, an electronic communication device 106, and an electronic transponder 108. The EFB device 104 is communicatively coupled to the electronic communication device 106, and the electronic communication device 106 receives information transmitted from both the electronic transponder 108 and a communications network 110. As explained in more detail below, the electronic communication device 106 receives information transmitted via the electronic transponder 108 according to a first communication protocol and repackages and transmits the received information to the EFB device 104 according to a second communication protocol. Also, in some embodiments, the electronic communication device 106 communicates with other devices or networks, including, for example, the communication network 110, using the first communication protocol, the second communication protocol, or a different third communication protocol.

The communications network 110 is an air traffic control network. The communications network 110 is, in some embodiments, a secondary radar system. In some embodiments, the communications network 110 is an aircraft surveillance system. The communications network 110 may be, for example, an ADS-B network. The communications network 110 communicates with the aircraft 102 as well as one or more other aircrafts (for example, aircraft 112A) and ground stations (for example, ground station 112B). The aircraft(s) 112A and the aircraft 102 broadcast their own positioning information, such as global positioning satellite (GPS) information, and on-board flight status information, such as altitude, velocity, and/or time, to other aircrafts and/or ground stations through the communications network 110.

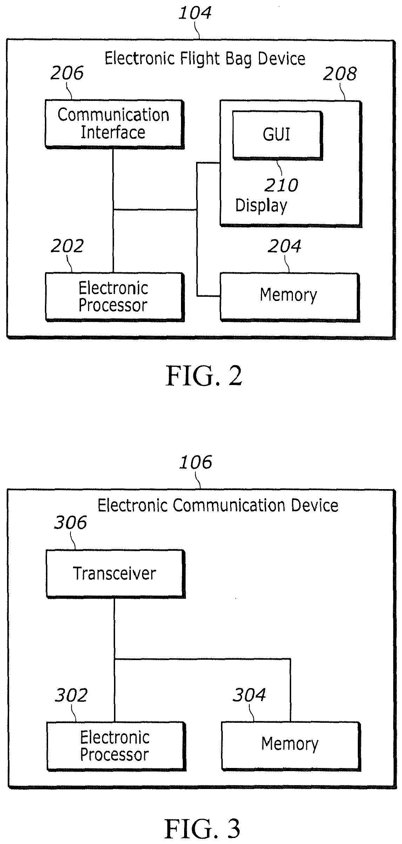

The electronic communication device 106, which is described in more detail below regarding FIG. 3, is configured to receive environmental (for example, weather) and traffic information from the communications network 110. In some embodiments, when the communications network 110 includes an ADS-B network, the electronic communication device 106 communicates with the communications network 110 via an ADS-B protocol, and, as noted above, in this embodiment, the electronic communication device 106 may be an ADS-B IN device. In some embodiments, the electronic communication device 106 repackages information received from the communications network 110 and transmits the repackaged information to the EFB device 104. It should be understood that in other embodiments, the electronic communication device 106 may communicate data received from the communications network to other components included in the aircraft 102.

The electronic communication device 106 additionally receives information from the electronic transponder 108. The electronic transponder 108 is an automated transceiver configured to emit one or more signals, according to one or more different protocols, including information regarding the aircraft 102 in response to an interrogation signal (for example, from the aircraft(s) 112A and/or the ground station(s) 112B). In some embodiments, the electronic transponder 108 is a surveillance transponder (for example, a Mode S transponder and/or a Traffic Alert and Collision Avoidance System, such as, for example, TCAS I or TCAS II). In other embodiments, the electronic transponder 108 may be part of an ADS-B OUT device. The information that the electronic transponder 106 emits includes one or more aircraft state parameters related to the aircraft 102. The aircraft state parameters may be, for example, an altitude, magnetic heading, an indicated airspeed, a ground speed, a calibrated airspeed, a true airspeed, a calculated engine torque, a pitch, and a roll measurement. The electronic transponder 108 receives the information from one or more other avionics systems and/or sensors 114 within the aircraft 102. For example, the pitch and roll measurements may be from an attitude and heading reference system (AHRS) of the aircraft 102.

As noted above, although the electronic transponder 108 is configured to transmit information to external devices and networks, the electronic communication device 106 can also be configured to intercept or receive the information transmitted via the electronic transponder 108. As also noted above, the electronic communication device 106 can receive information transmitted via the electronic transponder 108 according to a first communication protocol and transmit the received information (e.g., after processing/repackaging the received information) to the EFB device 104 according to a second communication protocol. The first communication protocol may be, for example ADS-B and/or TCAS II and the second communication protocol may be, for example, Wi-Fi or Bluetooth. In such embodiments, because the electronic communication device 106 is already configured to receive communications according to the same protocol that the electronic transponder 104 uses to communicate, the electronic communication device 106 is able to access additional aircraft state information from the electronic transponder 108 and provide this information to the EFB device 104 without the need for additional wired data connections to the corresponding systems/sensors 114 (e.g., between the systems/sensors 114 and the electronic communication device 106, the EFB device 104, or a combination thereof).

The electronic communication device 106 repackages the received information from the electronic transponder 108 and transmits the repackaged information to the EFB device 104. The EFB device 104, described in more detail below, is an electronic information management device configured to perform a one or more flight crew flight planning calculations and display air traffic and navigation maps/charts based on the information received from the electronic communication device 106. In some embodiments, the electronic communication device 106 and the EFB device 104 are integrated into a single device. In some embodiments, the EFB device 104 and/or the electronic communication device 106 may be integrated into the aircraft 102. In some embodiments, the electronic communications device 106 and the EFB device 104 are separate devices. The EFB device 104 and/or the electronic communication device 106 may be portable electronic devices. The EFB device 104 may be, for example, an electronic tablet or laptop computer. The EFB device 104 and the electronic communication device 106 may communicate with each other via a wired connection. In some embodiments, the EFB device 104 and the electronic communication device 106 communicate wirelessly, such as via Wi-Fi or Bluetooth.

FIG. 2 is an example of the EFB device 104. The EFB device 104 includes an electronic processor 202, a memory 204, a communication interface 206, and a display 208. The memory 120 may be a non-transitory computer-readable memory. The illustrated components, along with other various modules and components (not shown) are coupled to each other by or through one or more control or data buses (for example, a communication bus 330) that enable communication therebetween. The use of control and data buses for the interconnection between and exchange of information among the various modules and components would be apparent to a person skilled in the art in view of the description provided herein.

The electronic processor 202 obtains and provides information (for example, from the memory 204 and/or the communication interface 206), and processes the information by executing one or more software instructions or modules, capable of being stored, for example, in a random access memory ("RAM") area of the memory 204 or a read only memory ("ROM") of the memory 204 or another non-transitory computer readable medium (not shown). The software can include firmware, one or more applications, program data, filters, rules, one or more program modules, and other executable instructions. The electronic processor 202 is configured to retrieve from the memory 204 and execute, among other things, software related to the methods described herein.

The memory 204 can include one or more non-transitory computer-readable media and includes a program storage area and a data storage area. The program storage area and the data storage area can include combinations of different types of memory, as described herein. In the embodiment illustrated, the memory 204 stores, among other things, data relating to information received from the electronic communication device 106.

The communication interface 206 is configured to receive input and to provide system output. The communication interface 206 obtains information and signals from, and provides information and signals to, (for example, over one or more wired and/or wireless connections) devices both internal and external to the EFB device 104. The communication interface 206 may include a wireless transmitter or transceiver for wirelessly communicating to the electronic communication device 106. Alternatively, or in addition to a wireless transmitter or transceiver, the communication interface 206 may include a port for receiving a cable, such as an Ethernet cable, for communicating with the electronic communication device 106 or a dedicated wired connection. It should be understood that, in some embodiments, the EFB device 104 communicates with other devices through one or more intermediary devices, such as routers, gateways, relays, and the like.

The display 208 is a suitable display such as, for example, a liquid crystal display (LCD) touch screen, or an organic light-emitting diode (OLED) touch screen. In some embodiments, the EFB device 104 implements a graphical user interface (GUI) 210 (for example, generated by the electronic processor 202, from instructions and data stored in the memory 204, and presented on the display 208), that enables a user to interact with the EFB device 104. In some embodiments, the EFB device 104 enables display remotely. In some embodiments, the display 208 is integrated into the aircraft 102. For example, the display 208 may be electrically coupled to an instrument panel of the aircraft 102. In some embodiments, the display 208 include user input capabilities, such as a touch screen. In some embodiments the EFB device includes one or more user-actuatable inputs (for example, a keyboard and/or one or more push-buttons).

The display 208 provides a GUI 210 for an EFB application. The EFB application may include flight performance planning functions. Such functions may include flight planning calculations, navigation, and displaying weather and own-ship information and digital documentation such as navigational and approach charts, operations manuals, and aircraft checklists. For example, in some embodiments the EFB device 104, through the EFB application, is configured to determine, based on a user input (for example, via a touchscreen of the display 208), a flight trajectory to a particular location indicated by the user input and display, via a display 208, the determined flight trajectory. The determined flight trajectory is additionally based on information received from the electronic communication device 106.

FIG. 3 is an example of the electronic communication device 106. The electronic communication device 106 includes an electronic processor 302, a memory 304, and a transceiver 306. The electronic processor 302 and the memory 304 are similar to the electronic processor 202 and memory 204 of the EFB device 104. The electronic communication device 106 may include additional components (for example, one or more components similar to those of the EFB device 104 described above).

The transceiver 306 is configured to send and receive radio wave signals to and from other devices (for example, the electronic transponder 108 and the ground station(s) 112A and aircraft(s) 112B of the communication network 110). The transceiver 306 may be a single device or a transmitter and receiver pair. In some embodiments, the electronic communication device 106 includes more than one transceiver.

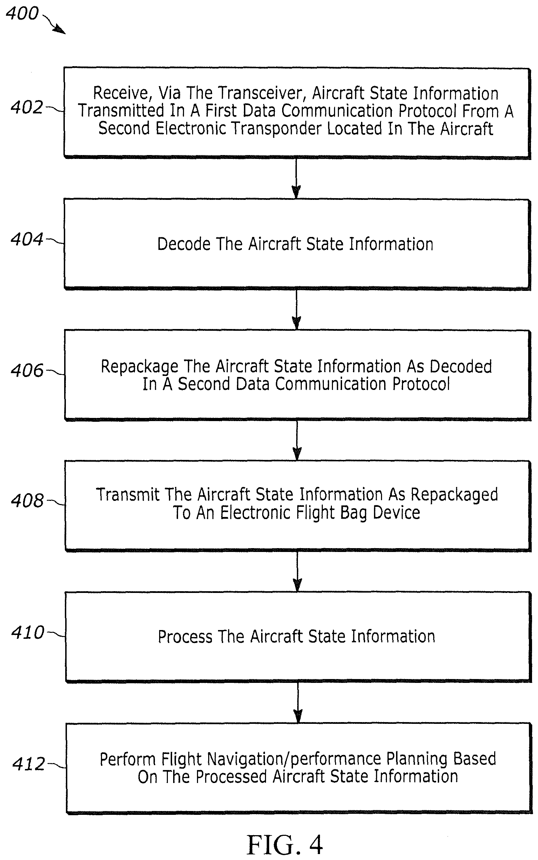

FIG. 4 illustrates a flowchart illustrating a method 400 for operating the electronic flight bag system 100 for the aircraft 102. As an example, the method 400 is described as being performed by the electronic communication device 106 (in particular, the electronic processor 302) and the EFB device 104 (in particular, the electronic processor 202). Additional electronic processors may also be included in the system 100 that perform all or a portion of the method 400.

At block 402, the electronic communication device 106 receives (for example, via the transceiver 306) aircraft state information transmitted in a first communication protocol via the electronic transponder 108. As mentioned above, the first communication protocol may be an ADS-B protocol and/or TCAS II protocol. The electronic communication device 106 then decodes and repackages the received aircraft state information as decoded in a second communication protocol (blocks 404 and 406 respectively). The second communication protocol may be a wireless communication protocol (for example, Wi-Fi). At block 408, the electronic communication device 106 transmits the air state information as repackaged to the EFB device 104. The EFB device 104 may then processes the aircraft state information as transmitted from the electronic communication device 106 and perform flight performance planning based on the processed aircraft state information (blocks 410 and 412 respectively). In some embodiments, the EFB device 104 is adjusts a planned flight trajectory of the aircraft 102 based on the aircraft state information and displays, on the display 208, the adjusted flight trajectory (for example, within the EFB application).

Therefore, embodiments described herein provide systems and methods for harvesting aircraft state information. By harvesting data accessible by an existing transponder, the EFB device is able to utilize additional information in flight planning and navigation with no need for additional wired data connections and/or devices.

Various features and advantages of some embodiments are set forth in the following claims.

## Claims

1. An electronic communication device for an electronic flight bag system of an aircraft, the electronic communication device comprising:
a transceiver; and
an electronic processor configured to
receive, via the transceiver, aircraft state information transmitted in a first communication protocol from an electronic transponder located in the aircraft;
decode the aircraft state information;
repackage the aircraft state information as decoded in a second communication protocol; and
transmit the aircraft state information as repackaged to an electronic flight bag device.

2. The electronic communication device of claim 1, wherein the electronic transponder is a Mode S transponder.

3. The electronic communication device of claim 1 or 2, wherein the electronic communication device is further configured to receive environmental and ground track information of the aircraft from a communications network outside of the aircraft according to a third communication protocol.

4. The electronic communication device of claim 3, wherein the third communication protocol is an Automatic Dependent Surveillance - Broadcast (ADS-B) protocol.

5. An electronic flight bag system for an aircraft, the system comprising:
an electronic communication device according to one of claims 1-4 located in the aircraft; and
the electronic flight bag device communicatively coupled to the electronic communication device, the electronic flight bag device including
a transceiver configured to receive the aircraft state information as repackaged
and transmitted via the electronic communication device,
and an electronic processor configured to:
process the aircraft state information from the electronic communication
device, and
perform flight performance planning based on the processed aircraft state information.

6. The system of claim 5, wherein the electronic communication device is a portable electronic communication device.

7. The system of claim 5 or 6, wherein the aircraft state information includes at least one selected from a group consisting of an altitude, magnetic heading, an indicated airspeed, a ground speed, a calibrated airspeed, a true airspeed, a calculated engine torque, a pitch, and a roll measurement.

8. The system of one of claims 5-7, wherein the second communication protocol is a wireless communication protocol, particularly is Wi-Fi.

9. A method for operating an electronic flight bag system for an aircraft, the method comprising:
receiving, at an electronic communication device located in the aircraft, aircraft state information transmitted in a first communication protocol via a electronic transponder located in the aircraft;
decoding, at the electronic communication device, the aircraft state information;
repackaging, at the electronic communication device, the aircraft state information as decoded in a second communication protocol; and
transmitting, from the electronic communication device, the air state information as repackaged to an electronic flight bag device.

10. The method of claim 9, wherein the electronic transponder is a Mode S transponder.

11. The method of claim 9 or 10, wherein the electronic communication device is further configured to receive environmental and ground track information of the aircraft from a communications network outside of the aircraft according to a third communication protocol, particularly wherein the third communication protocol is an Automatic Dependent Surveillance - Broadcast (ADS-B) protocol.

12. The method of one of claims 9-11, wherein the electronic communication device is a portable electronic communication device.

13. The method of one of claims 9-12, wherein the aircraft state information includes at least one selected from a group consisting of an altitude, magnetic heading, an indicated airspeed, a ground speed, a calibrated airspeed, a true airspeed, a calculated engine torque, a pitch, and a roll measurement.

14. The method of one of claims 9-13, wherein the second communication protocol is a wireless protocol, particularly is Wi-Fi.

15. The method of one of claims 9-14, the method further comprising:
processing, at the electronic flight bag device, the aircraft state information as transmitted from the electronic communication device; and
performing flight performance planning based on the processed aircraft state information.
